# EUROPÄISCHE PATENTSCHRIFT

(11) **EP 1 948 347 B1**
(45) Veröffentlichungstag und Bekanntmachung des Hinweises auf die Patenterteilung: **21.07.2010**
(21) Anmeldenummer: 06818396.1
(22) Anmeldetag: 07.11.2006
(51) Int. Cl.: B01D 46/52, B01D 29/11, B29C 65/16

(54) **LASERSCHWEISSVERFAHREN UND DAMIT HERGESTELLTES FILTERELEMENT**
LASER WELDING METHOD AND FILTER ELEMENT PRODUCED BY IT
PROCEDE DE SOUDAGE AU LASER ET ELEMENT FILTRE FABRIQUE PAR CE PROCEDE

(30) Priorität: 11.11.2005 DE 102005054272
(43) Veröffentlichungstag der Anmeldung: 30.07.2008
(73) Patentinhaber: Carl Freudenberg KG, 69469 Weinheim (DE)
(72) Erfinder: DRIESEN, Eckart, 69121 Heidelberg (DE); SCHLÖR, Ulrich, 64297 Darmstadt (DE)
(86) Internationale Anmeldenummer: PCT/EP2006/010640
(87) Internationale Veröffentlichungsnummer: WO 2007/054262

(56) Entgegenhaltungen:
- EP-A- 1 710 007
- EP-A2- 1 438 998
- WO-A-2006/050763
- DE-A1- 10 058 251
- DE-A1- 10 211 782
- DE-A1- 10 317 971

## Beschreibung

### Technisches Gebiet

Die Erfindung betrifft ein Verfahren zum Verbinden eines Filtermediums mit einem Anschlusselement gemäß, dem Oberbegriff des Patentanspruchs 1 sowie ein Filterelement gemäß dem Oberbegriff des Patentanspruchs 8.

### Stand der Technik

Aus der EP 1 438 998 A2 ist bekannt, zwei Gehäuseteile unter Zwischenlage eines Filtermediums miteinander durch Laserstrahlung zu verbinden. Die DE 102 11 782 A1 offenbart die Verbindung eines Filtermediums mit einem Kunststoffrahmen durch Laserstrahlung. Die EP 1 710 007 A1 offenbart die Verbindung zweier Gehäuseteile durch Laserstrahlung, wobei ein Gehäuseteil für Laserlicht durchlässig und das andere Gehäuseteil für Laserlicht absorbierend ist. Aus der WO 2006/050 763 A1 ist ein sternförmiges Filterelement bekannt, dessen Faltenrücken durch Fixiermittel beabstandet werden.

Aus dem Stand der Technik sind bereits Verfahren bekannt, die sich der Ultraschweißtechnik bedienen, um Filtermedien mit Elementen zu verbinden. Bei der Ultraschallschweißtechnik werden definierte Bereiche eines Materials angeschmolzen und mit einem weiteren Material stoffschlüssig verbunden. Dies erfolgt, indem Ultraschallsonotroden mit einer anzuschmelzenden Materiallage in Kontakt gebracht werden. Dabei ist nachteilig, dass die Schmelzbereiche durch die Sonotroden mit relativ hoher Kraft großflächig beaufschlagt werden. Dies führt dazu, dass das Material um die eigentlichen Kontaktstellen mit relativ großen Einprägungen, Stauchungen, Verdickungen und anderen Deformierungen versehen wird.

Materialdeformierungen führen zu einer Verschlechterung der Filterwirkung und schränken daher die Effektivität und den Wirkungsgrad von Filteranordnungen erheblich ein. Auch die Verwendung von Klebstoff als Verbindungsmittel ist nachteilig, da dieser nur unter großem Aufwand verarbeitbar ist.

### Darstellung der Erfindung

Der Erfindung liegt daher die Aufgabe zugrunde, Filtersysteme zu schaffen, welche bei einfacher Fertigung eine optimale Filterleistung gewährteisten.

Erfindungsgemäß wird die voranstehende Aufgabe mit den Merkmalen des Patentanspruchs 1 gelost.

Danach ist ein Verfahren zum Verbinden eines Filtermediums mit einem Anschlusselement angegeben, bei dem das Filtermedium und das Anschlusselement miteinander in Kontakt verbracht und gleichzeitig durch Einwirkung von Laserstrahlung miteinander verbunden werden.

Das Verfahren ist dadurch gekennzeichnet, dass mindestens ein Anschlusselement mit den Faltenstirnseiten der flächigen Lage verbunden wird, wobei ein mehrlagiges Anschlusselement an das Filtermedium angelegt wird, wobei mindestens eine Lage laserlichttransparent und eine weitere Lage laserlichtabsorbierend ist und die laserlichtabsorbierende Lage oder die Lage mit dem Filtermedium verbunden wird, und/ oder dass mindestens ein Anschlusselement mit den Faltenstirnseiten der flächigen Lage verbunden wird, wobei ein Anschlusselement an das Filtermedium angelegt wird, wobei mindestens eine laserlichtabsorbierende Lage dem Filtermedium zugeordnet ist und das Anschlusselement mit dem Filtermedium verbunden wird.

In erfindungsgemäßer Weise ist erkannt worden, dass die Einwirkung von Laserlicht ausschließlich Materialbereiche in ihrer Struktur verändert, welche als Kontaktstellen fungieren sollen. Die Verwendung von Laserlicht erlaubt neben einer besonders raschen Erwärmung von Materialien eine besonders präzise und materialschonende Fertigung von Filteranordnungen. Indem ein Laserstrahl punktuell auf eine Kontaktstelle gerichtet werden kann, werden umliegende Materialbereiche - ganz im Gegensatz zum Ultraschallschweißvorgang - mit vergleichsweise geringer Kraft beaufschlagt und kaum deformiert. Insoweit wird vermieden, dass Materialbereiche in ihrer Filterleistung beeinträchtigt werden, welchen keine Verbindungsfunktion zukommt. Des Weiteren ist erkannt worden, dass die Fügepartner zur Anlage gebracht werden können und aneinander liegend in einem Arbeitsschritt miteinander verbunden werden können:

Bei der erfindungsgemäßen Verbindungstechnik sind nur die der Kontaktstelle zugewandten Bereiche des Filtermediums und des Anschlusselements an- oder aufgeschmolzen, um mit dem Fügepartner eine stoffschlüssige Verbindung einzugehen. Vorteilhaft zeigen die Bereiche des Filtermediums keine gestauchten und verdickten Zonen nahe den Kontaktstellen, da das Anschlusselement nicht mit hoher Kraft während des Schweißprozesses angepresst werden muss. Bei der Ultraschallschweißtechnik werden ganz im Gegensatz zu dem erfindungsgemäßen Verfahren die Fügepartner unter starker mechanischer Beanspruchung geschweisst. Hierdurch entstehen üblicherweise gestauchte und verdickte Bereiche an zumindest einem Fügepartner. Auch auf Klebstoffe verzichtet das erfindungsgemäße Verfahren, so dass die Kontaktstellen, an denen die Fügepartner aneinander liegen, klebstoffrei sind. Klebstoffreste können die Filterleistung verschlechtern.

Diese zuvor beschriebenen, die Filterleistung einschränkenden Nachteile werden mit dem erfindungsgemäßen Verfahren vermieden. Folglich ist eine Filteranordnung realisierbar, welche bei einfacher Fertigung eine optimale Filterleistung gewährleistet.

In besonders vorteilhafter Weise wird als Filtermedium eine gefaltete flächige Lage verwendet. Hierdurch ist es möglich, die effektive Filterfläche zu erhöhen. Vor diesem Hintergrund ist auch denkbar, dass ein Filtermedium als Flachfilter oder Sternfilter ausgestaltet ist Flachfilter finden überwiegend in der Luftfiltration, insbesondere im Kraftfahrzeugbereich, Anwendung. Einem Flachfilter könnte zur Verbesserung der Luftqualität Aktivkohle zugeordnet sein. Sternfilter dienen häufig der Flüssigkeitsfiltration, insbesondere der Filtration von Ölen.

Mindestens ein Anschlusselement wird mit den Faltenstirnseiten der flächigen Lage verbunden. Dabei ist denkbar, dass die Faltenstirnseiten mit einem streifenförmigen Anschlusselement verbunden werden, um die Falten in einem definierten Abstand zu halten. Des Weiteren ist denkbar, dass ein Anschlusselement, welches mit den Faltenstirnseiten verbunden ist, als Rahmenstruktur fungiert, welche dem Filterelement eine erhöhe Biegesteifigkeit und Stabilität verleiht. Dies ist insbesondere dann von Vorteil, wenn das Filterelement montiert wird. Die Rahmenstruktur kann auch abdichtend gegen Filtergehäusewandungen wirken.

Als Filtermedium wird ein thermoplastischer Vliesstoff verwendet. Die Verwendung eines thermoplastischen Vliesstoffes erlaubt das Anschmelzen des Filtermediums und damit einen Verbund mit dem Anschlusselement. Vor diesem Hintergrund ist nicht nur das Filtermedium als thermoplastischer Vliesstoff ausgestaltet, sondern auch das Anschlusselement. In diesem konkreten Fall können die beiden zu verschmelzenden Partner derart angeschmolzen werden, dass die Schmelzen an den Kontaktstellen miteinander in flüssigem Zustand vermischt werden. Hierdurch ist ein besonders fester Verbund realisiert.

Es wird ein Anschlusselement verwendet, welches mehrlagig ausgebildet ist. Hierbei ist mindestens eine Lage laserlichttransparent und eine weitere Lage laserlichtabsorbierend. Diese konkrete Ausgestaltung erlaubt die Verwendung eines besonders stabilen Anschlusselements, welches aus einer laserlichttransparenten stabilen Lage und einer laserlichtabsorbierenden Lage besteht, die bei Laserlichtbeaufschlagung zum Schmelzen oder zur Erwärmung neigt. Insoweit kann die laserlichtabsorbierende Lage eine Verbindung mit dem Filtermedium erzeugen. Dabei kann der Verbund zwischen Anschlusselement und Filtermedium entweder durch Aufschmelzen der laserlichtabsorbierenden Lage hergestellt werden oder aufgrund deren Erwärmung. Bei einer Erwärmung der laserlichtabsorbierenden Lage wird ein Aufschmelzen des Anschlusselements und des Filtermediums bewirkt, so dass diese an den aufgeschmolzenen Bereichen ineinander fließen können.

Die laserlichtabsorbierende Lage kann auch dem Filtermedium zugeordnet sein. Insbesondere kann sie an diesem fest anliegen oder ein Teil des Flitermediums sein. Diese konkrete Ausgestaltung erlaubt das Anbringen eines völlig laserlichttransparenten Anschlusselements an das Filtermedium. Des Weiteren wird der Laserschweißvorgang vereinfacht, wenn die laserlichtabsorbierende Lage dem Filtermedium fest zugeordnet ist oder ein Teil des Filtermediums ist.

Daher ist die eingangs genannte Aufgabe gelöst.

Mindestens ein Anschlusselement könnte mit den Faltenrücken der flächigen Lage verbunden werden. Diese konkrete Ausgestaltung stellt sicher, dass der Abstand zwischen den Faltenrücken konstant gehalte wird. Dies ist insbesondere dann notwendig, wenn das Filtermedium starken Strömungen unterworfen wird. Hierbei können nämlich im ungünstigsten Fall einzelne Falten miteinander verkleben, so dass die effektive Filterfläche reduziert und die Fiiterwirkung negativ beeinträchtigt wird.

Das Anschlusselement könnte als Endkappe eines Sternfilters ausgestaltet und aus dem gleichen Material wie das Filtermedium gefertigt sein. Diese Ausgestaltung ermöglicht einen homogenen Aufbau eines Filterelements und eine problemlose stoffschlüssige Verbindung des Anschlusselements mit dem Filtermedium, so dass eine optimierte Dichtheit realisierbar ist.

Das Anschlusselement könnte als V-Lasche oder streifenförmiges Element ausgestaltet sein, welches sich entlang einer Seite eines Flachfilters erstreckt. Hierdurch kann eine Dichtwirkung erzielt werden, wenn nämlich die V-Lasche als Dichtmittel fungiert und an einem Filtergehäuse angelegt werden kann.

Das Anschlusselement und das Filtermedium könnten beim Laserschweißvorgang derart schonend gegeneinander gedrückt werden, dass weder das Anschlusselement noch das Filtermedium dauerhaft deformiert werden. Dieser Verfahrensschritt erleichtert das Einfließen der Schmelze eines der beiden zu verbindenden Partner in das Material des anderen. Dabei ist denkbar, dass nur einer der zu verbindenden Partner angeschmolzen wird und die Schmelze zumindest teilweise in das Material des nicht angeschmolzenen Partners einfließt. Vor diesem Hintergrund besteht das Filtermedium aus einem Vliesstoff. Diese konkrete Ausgestaltung stellt sicher, dass eine ausreichende Porosität des Filtermediums gegeben ist, um angeschmolzenes Material des Anschlusselements aufzunehmen und eine stabile stoffschlüssige Verbindung zu realisierten.

Zumindest dem Filltermedium könnte zur Absorption von Gerüchen Aktivkohle beigemengt sein. Die Aktivkohle könnte homogen innerhalb des Filtermediums verteilt sein. Vor diesem Hintergrund ist denkbar, dass auch in den Anschlusselementen Aktivkohle verteilt ist.

Mit der Laserstrahlung könnten definierte Bereiche des Filtermediums und/oder des Anschlusselements angeschmolzen werden, welche der Laserstrahlungsquelle abgewandt liegen. Solche Bereiche könnten innerhalb eines zumindest teilweise laserlichttransparenten Materials liegen oder von diesem bedeckt sein. Das Anschmelzen definierter Bereiche erlaubt die selektive Ausbildung von Kontaktstellen, welche über die gesamte Oberfläche des Filtermediums bzw. des Anschlusselements verteilt sein können.

Die Ausdehnung eines angeschmolzenen Bereichs, nämlich einer Kontaktstelle, könnte in zumindest einer Raumrichtung höchstens 1 Millimeter, vorzugsweise 0,1 Millimeter, betragen. Diese Dimensionierung realisiert eine besonders geringe Beeinträchtigung des Filtermediums im Hinblick auf dessen Filtereigenschaften durch angeschmolzene Bereiche. Darüber hinaus verleihen angeschmolzene Bereiche einer Dimensionierung im Bereich 0,1 mm auf überraschende Weise dem Verbund zweier verschmolzener Partner eine ausreichende Zugfestigkeit, um eine Ablösung der Partner voneinander zu verhindern.

Ganz konkret könnte ein angeschmolzener Bereich eine Tiefe von 0,1 bis 1 mm betragen. Unter Tiefe wird die Ausdehnung des Bereichs in Verbindungsrichtung des Filtermediums und des Anschlusselements, also orthogonal zu den aneinander liegenden Flächen der Fügepartner verstanden. Hierdurch werden das Anschlusselement und das Filtermedium nur ganz geringfügig durch angeschmolzenes und wieder erkaltetes Material in ihrer Elastizität beeinflusst.

Ein Diodenlaser mit einer Wellenlänge von 980 nm und einer Leistung von 90 W hat sich als besonders vorteilhaft erwiesen, um thermoplastische Vliesstoffe anzuschmelzen. Eine flächige Verbindung zweier Fügepartner lässt sich mit einer Laserstrahlungsquelle erzielen, die einen streifenförmigen Lichtfleck auf dem Anschlusselement bzw. dem Fiitermedium erzeugt. Hierbei kann der Streifen eine Breite von 1 mm und eine Länge von 30 mm aufweisen. Mit dieser Lichtquelle lässt sich eine Kontaktstelle erzeugen, die 1 mm breit, 30 mm lang und 0,1 bis 1 mm tief ist.

Die Kontaktstellen können punktförmig, linienförmig oder flächig ausgestaltet sein. Eine linienförmige Verbindung gewährleistet eine größere Steifigkeit und geringere Beweglichkeit des Filtermediums relativ zum Anschlusselement. Die Vorkehrung von Schweißpunkten ermöglicht eine leichte Bewegbarkeit des Filtermediums gegen das Anschlusselement. Dies kann insbesondere dann von Vorteil sein, wenn die Filtereigenschaften möglichst wenig durch Fixierungsstrukturen beeinträchtigt werden sollen. Eine besonders feste und steife Verbindung kann durch die Ausbildung flächenförmiger Kontaktstellen realisiert sein.

Die Energie der Laserstrahlung könnte durch eine optische Einrichtung auf die Bereiche bzw. Kontaktstellen übertragen werden. Diese konkrete Ausgestaltung des Verfahrens ermöglicht die Verwendung von Linsen und/ oder Spiegeln, um Laserstrahlen umzulenken oder aufzuspalten. Hierdurch ist realisierbar, dass mit einem einzigen Laserstrahl beilspielsweise zwei Kontaktstellen gleichzeitig geschaffen werden, wenn nämlich ein Laserstrahl in zwei Strahlen aufgespalten wird.

Die optische Einrichtung könnte mit dem Filtermedium und/ oder dem Anschlusselement in Kontakt gebracht werden. Dieser Verfahrensschritt gewährleistet eine besondere Arbeitssidherheit, indem vermieden wird, dass Laserlicht in einen Raum gestreut wird, in dem sich Arbeitspersonal befindet.

Vor diesem Hintergrund könnte als optische Einrichtung mindestens eine für Laserlicht transparente Kugel verwendet werden. Die Kugel könnte als Glaskugel ausgestaltet sein. Die Verwendung einer Kugel erlaubt ein nahezu reibungsfreies Gleiten auf dem anzuschmelzenden Material. Indem die Kugel nahezu reibungsfrei über das anzuschmelzende Material gleitet, wird das anzuschmelzende Material nicht mit Druckstellen und somit unerwünschten Materialdeformationen beeinträchtigt. Dabei könnte die Druckbelastung durch die Kugel genau so stark gewählt werden, dass eine Schmelze eines Fügepartners in den anderen eindringt.

Vor diesem Hintergrund könnte als optische Einrichtung mindestens eine für Laserlicht transparente, rotierbare Scheibe oder ein Zylinder verwendet werden, durch welche bzw. durch welchen der Laserstrahl in radialer und/ oder diametraler Richtung hindurchleitbar ist. Die Verwendung einer oder mehrerer solcher Scheiben oder Zylinder erlaubt einen besonders effizienten Fertigungsprozess für Flachfilter mit einem Faltenbalg, der streifenförmige Anschlusselemente aufweist. Die Anschlusselemente könnten mittels rotierbarer Scheiben oder Zylinder, welche an den Seiten des Faltenbalgs unter Zuführen und Andrücken der Anschlusselemente abrollen angeschweißt werden. Dabei könnte der Laserstrahl so geführt werden, dass er orthogonal auf ein tangential zwischen der Scheibe bzw. dem Zylinder und dem Faltenbalg geführtes Anschlusselement trifft.

Denkbar ist vor diesem Hintergrund, dass die laserlichtabsorbierende Lage und die laserlichttransparente Lage durch Koextrusion, hergestellt werden. Dies ermöglicht eine besonders rationelle Fertigung.

Denkbar ist auch, dass die laserlichtabsorbierende Lage durch Imprägnieren oder Drucken auf die laserlichttransparente stabile Lage aufgebracht wird. Die Verwendung eines Imprägnier oder Imprägnier-Druckverfahrens erlaubt die Realisierung einer besonders dünnen laserlichtabsorbierenden Lage.

Vor diesem Hintergrund könnte eine laserlichttransparente Lage Pigmentierungen aufweisen, die entweder auf der Oberfläche der Lage oder in dieser homogen verteilt vorliegen. Die Pigmentierungen bewirken eine Absorption des Laserlichts und führen dann zum Aufschmelzen des Materials der Lage. Die Pigmente könnten in einem Extrusionsverfahren in die Lage eingebracht werden.

Die laserlichtabsorbierende Lage könnte auf das Filtermedium aufgedruckt sein oder als Beschichtung auf diesem vorliegen. Bedruckungen und Beschichtungen lassen sich besonders rasch aufbringen. Vorzugsweise könnten die Faltenstirnseiten eines gefalteten Filtermediums bedruckt oder beschichtet sein, um ein Anschlusselement problemlos aufzunehmen.

Vor diesem Hintergrund ist auch denkbar, dass das Filtermedium Aktivkohle umfasst und die Aktivkohlepartikel als laserlichtabsorbierende Zentren fungieren. Vorteilhaft wird die geruchsabsorbierende Wirkung der Aktivkohle mit deren Vermögen Laserlicht zu absorbieren kombiniert. Bei der Lasedichtabsorption wird Wärme erzeugt, welche Bereiche des Filtermediums und/ oder des Anschlusselements aufschmelzen. Wenn das Filtermedium als Faltenbalg ausgestaltet ist, könnten die Aktivkohlepartikel an den Faltenstirnmseiten angelagert sein und das Anbringen eines Anschlusselements ermöglichen.

Die laserlichttransparente Lage könnte als Führung oder Träger für die andere Lage, nämlich die laserlichtabsorbierende Lage, dienen. Dabei könnten die beiden Lagen getrennt voneinander dem Filtermedium zugeführt werden. Die laserlichttransparente Lage kann wieder verwertbar im Kreis geführt werden, wobei die laserlichtabsorbierende Lage nach Ablösung von der laserlichttransparenten am Filtermedium haftend verbleibt. Dies erlaubt eine kostengünstige und präzise Anordnung der laserlichtabsorbierenden Lage.

Die eingangs genannte Aufgabe wird des Weiteren mit den Merkmalen des Patentanspruchs 8 gelöst. Danach umfasst ein Filterelement mindestens ein Filtermedium und mindestens ein dem Filtermedium zugeordnetes Anschlusselement, wobei das Filtermedium und das Anschlusselement durch Kontaktstellen miteinander verbunden sind, welche einen durch Laserstrahlung erzeugten Schmelzbereich umfassen.

Das Filterelement ist dadurch gekennzeichnet, dass die Faltenstirnseiten mit dem Anschlusselement verbunden sind, wobei das Anschlusselement mehrlagig ausgebildet ist, wobei mindestens eine Lage laserlichttransparent und eine weitere Lage laserlichtabsorbierend ist, und/ oder dass die Faltenstirnseiten mit dem Anschlusselement verbunden sind, wobei das Filtermedium eine laserlichtabsorbierende Lage oder einen laserlichtabsorbierenden Bereich aufweist.

Bei dem erfindungsgemäßem Filterelement sind nur die der Kontaktstelle zugewandten Bereiche des Fiitermediums und des Anschlusselements an- oder aufgeschmolzen, um mit dem Fügepartner eine stoffschlüssige Verbindung einzugehen.

Um Wiederholungen in Bezug auf die erfinderische Tätigkeit zu vermeiden, sei auf die Ausführungen zum Verfahren als solchem verwiesen.

Das Anschlusselement könnte zumindest eine Seite des Filtermediums vollflächig bedecken. Diese Ausgestaltung erlaubt die Verwendung des Anschlusselements als Vorfilter.

Die Kontaktstellen, an denen die Fügepartner des erfindungsgemäßen Filterelements aneinander liegen, könnten klebstoffrei sein. Klebstoffreste können die Filterleistung verschlechtern.

Vorteilhaft könnten die Bereiche des Filtermediums keine gestauchten und verdickten Zonen nahe den Kontaktstellen zeigen, da das Anschlusselement nur mit geringer Kraft während des Laserschweißprozesses angepresst wurde. Bei der Ultraschallschweißtechnik wird ganz im Gegensatz zu dem erfindungsgemäßen Verfahren ein Fügepartner unter starkem Druck gegen den anderen gepresst. Hierdurch entstehen üblicherweise gestauchte und verdickte Bereiche an zumindest einem Fügepartner, welche die Filterleistung negativ beeinträchtigen.

Alle Ausführungen, welche zu besonders vorteilhaften Ausgestaltungen des Verfahrens als solchem gemacht wurden, sind sämtlich auf vorteilhafte Ausgestaltungen des Filterelements gemäß den auf das Filterelement rückbezogenen Ansprüche anwendbar.

Es gibt nun verschiedene Möglichkeiten, die Lehre der vorliegenden Erfindung auf vorteilhafte Weise auszugestalten und weiterzubilden. Dazu ist einerseits auf die den Patentansprüchen 1 und 8 nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: ein sternförmiges Filterelement mit einem streifenförmigen Anschlusselement,
- Fig. 2: ein sternförmiges Filterelement, welches als Anschlusselement eine vollflächige Umhüllung umfasst,
- Fig. 3: eine gefaltete flächige Lage, an der eine laserlichttransparente Lage anliegt, welche eine Lage gegen das Filtermedium führt,
- Fig. 4: zwei Flachfilter mit V-förmigen Laschen,
- Fig. 5: eine mit einem Rasterelektronenmikroskop gemachte Aufnahme eines mit einem gefalteten Filtermedium verschweissten Anschlusselements und
- Fig. 6: eine Nahaufname der geschmolzenen und wieder erkalteten lasergeschweissten Kontaktstelle B, die in Fig. 5 gekennzeichnet ist.

### Ausführung der Erfindung

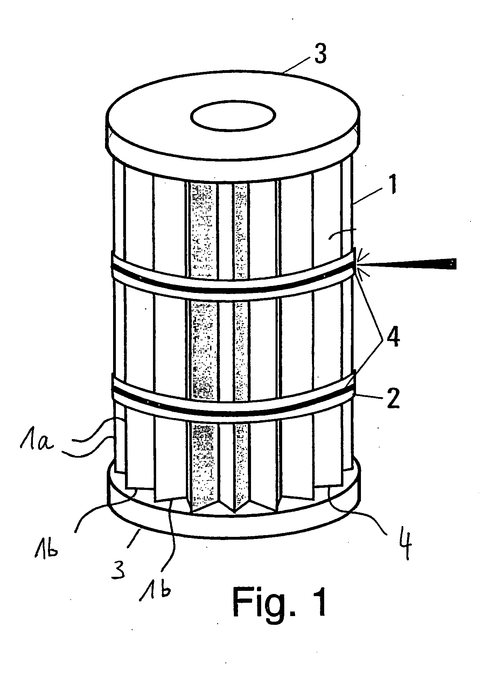

Fig. 1 zeigt ein Filtermedium 1 eines Sternfilters, welches mit einem Anschlusselement 2 verbunden ist. Das Anschlusselement 2 ist durch Einwirkung von Laserstrahlung mit dem Filtermedium 1 verbunden. Das Filtermedium 1 ist als gefaltete flächige Lage ausgestaltet. Das Anschlusselement 2 ist mit den Faltenrücken 1a der flächigen Lage 1 verbunden. Das Anschlusselement 2 ist streifenförmig ausgebildet. Ein weiteres Anschlusselement 3 ist mit den Faltenstirnseiten 1 b der flächigen Lage 1 verbunden und als Kappe 3 ausgebildet.

Das Filtermedium 1 und das Anschlusselement 2 sind durch Kontaktstellen 4 miteinander verbunden, welche höchstens 1 mm breit sind. Die Faltenrücken 1a und die Faltenstirnseiten 1 b weisen an den Kontaktstellen 4 keine Stauchungen oder Verdickungen auf. Des Weiteren sind die Kontaktstellen 4 klebstoffrei.

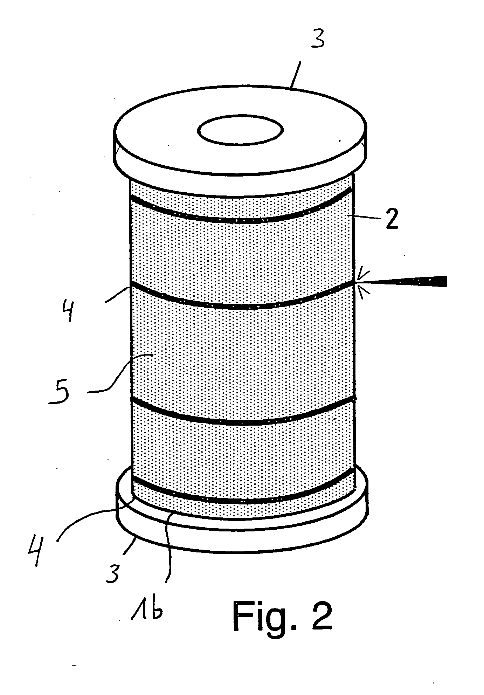

Fig. 2 zeigt ein Filterelement gemäß Fig. 1, bei dem das Anschlusselement 2 als vollflächige Umhüllung 5 ausgestaltet ist. Die vollflächige Umhüllung 5 fungiert als Vorfilter für das Filtermedium 1. Die Kontaktstellen 4 sind umlaufend mit einer Breite von höchstens 1 mm ausgestaltet. Die Umhüllung 5 ist an den Faltenrücken 1a des Filtermediums 1 durch Einwirkung von Laserstrahlung angeschweißt. Sowohl die Faltenrücken 1a als auch die Umhüllung 5 weisen an den Kontaktstellen 4 keine gestauchten Bereiche und Verdickungen auf. Die Kontaktstellen 4 sind klebstofffrei. Dem Filterelement sind des Weiteren Kappen 3 zugeordnet, die ebenfalls durch Laserschweißen am Filtermedium 1, nämlich an den Faltenstirnseiten 1 b festgelegt sind. Auch hier treten keine gestauchten und verdickten Bereiche auf, die mit Klebstoff behaftet sind.

Die Kappen 3, die Anschlusselemente 2 und die Filtermedien 1 könnten materialeinheitlich ausgebildet sein.

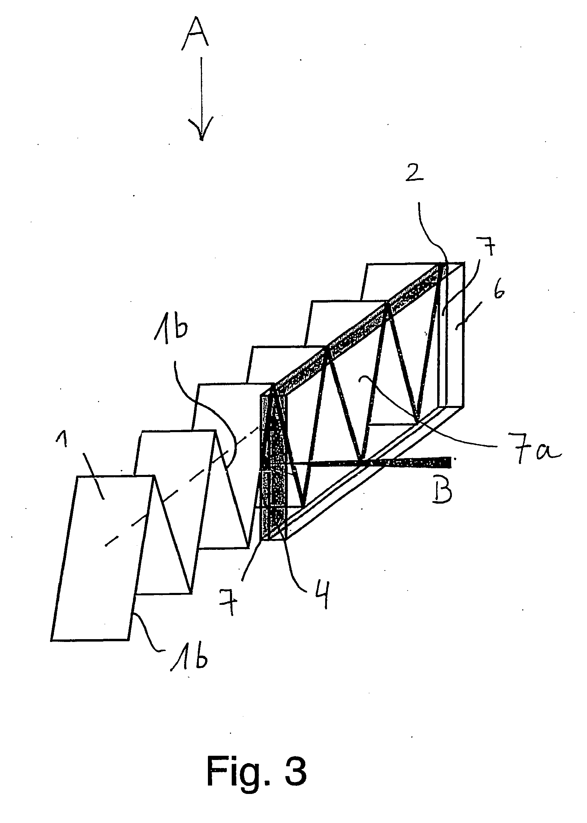

Fig. 3 zeigt eine gefaltete flächige Lage 1 eines Filtermediums 1, welcher ein Anschlusselement 2 zugeordnet ist. Dieses Anschlusselement 2 kann einlagig oder zweilagig ausgebildet sein.

Gemäß einer ersten Alternative drückt eine laserlichttransparente Lage 6 eine laserlichtabsorbierende Lage 7 nahezu kraftlos gegen die Faltenstirnseiten 1 b der Lage 1. Die Lage 7 wird durch Laserstrahlung (Pfeil B) mit der Lage 1 verschmolzen und verbunden.

Die Lage 7 kann gemäß einer zweiten Alternative auch als bedruckter Bereich, als Beschichtung oder Pigmentierung der Lage 6 ausgestaltet sein, welche das Laserlicht absorbiert. Hierdurch werden die Lage 6 und das Filtermedium 1 aufgeschmolzen und miteinander an den Kontaktstellen 4 verbunden.

Des Weiteren könnte den Faltenstirnseiten 1 b der gefalteten Lage 1 eine Beschichtung, Pigmentierung, Bedruckung oder eine ähnliche Lage oder ein ähnlicher laserlichtabsorbierender Bereich zugeordnet sein, um die laserlichttransparente Lage 6 an das Filtermedium 1 anzuschweissen.

Die Laserlichtquelle ist der laserlichtabsorbierenden Lage 7 oder dem laserlichtabsorbierenden Bereich abgewandt. Vielmehr liegen die Lage 7 oder der Bereich im Inneren der Anordnung aus Anschlusselement und Filtermedium 1, so dass auch die entstehenden Kontaktstellen 4 der Laserlichtquelle abgewandt im Inneren des Filterelements liegen.

Die verwendete Laserstrahlungsquelle erzeugt einen streifenförmigen Lichtfleck einer Breite von 1 mm und einer Länge von 30 mm auf dem Anschlusselement 2 bzw. dem Filtermedium 1. Hierdurch ist eine nahezu vollflächige Verschweißung des Anschlusselements 2 mit den Faltenstirnseiten 1b realisierbar. An den Kontaktstellen 4 treten keine verdickten oder gestauchten Bereiche der Faltenstirnseiten 1b auf. Die angeschmolzenen Bereiche der Kontaktstellen 4 weisen eine Tiefe von 0,1 bis 1 mm auf. Des Weiteren sind nur die Faltenstirnseiten 1b mit den Lagen 6, 7 verbunden. Sowohl die Kontaktstellen 4 als auch die dreieckförmigen Zwischenräume 7a der Lage 7 bzw. der Lage 6 sind klebstoffrei. Als Folge hiervon ist das Filterelement sehr flexibel und problemlos verdrillbar und kann auch in komplex ausgeformte und gewölbte Filtergehäuse eingesetzt werden.

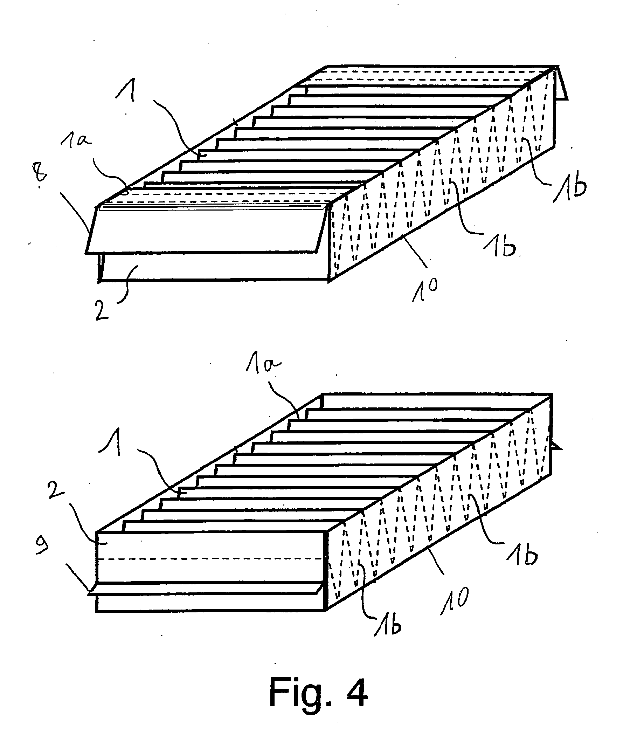

Fig. 4 zeigt zwei Flachfilter, die in ähnlicher Weise wie in Fig. 3 beschrieben hergestellt sind. Diesen sind an zumindest einer Seite streifenförmige Anschlusselemente 2 mit V-förmig abragenden Schenkeln 8 und 9 zugeordnet. Die Anschlusselemente 2 sind mit der flächigen Lage 1 durch Laserschweißen verbunden. Die Anschlusselemente 2 des oberen Flachfilters in Fig. 4 sind an dessen Faltenrücken 1a angeschweisst.

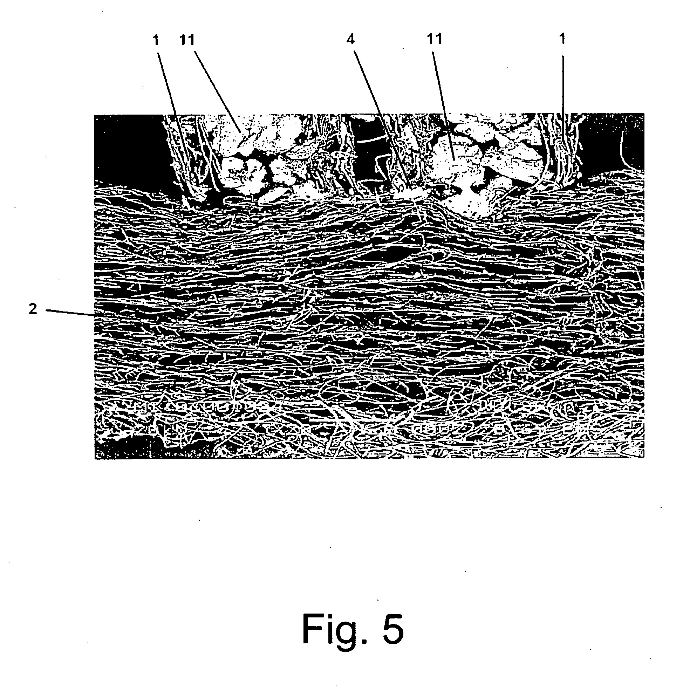

Bei einer Ausführungsform des Flachfilters sind die Schenkel 8 der oberen Kante der Anschlusselemente 2, bei einer anderen Ausführungsform sind die Schenkel 9 etwa der Mitte der Anschlusselemente 2 zugeordnet. Diese Schenkel 8, 9 dienen der dichtenden Anlage in einem Filtergehäuse, welches den Flachfilter aufnimmt. Die streifenförmigen Anschlusselemente 10 sind mit den Faltenstirnseiten 1b der Lage 1 durch Laserschweißen verbunden. Auch den streifenförmigen Anschlusselementen 10 könnten zur dichtenden Anlage der Flachfilter V-förmige Schenkel 8, 9 wie zuvor beschrieben zugeordnet sein. Fig. 5 zeigt eine mit einem Rasterelektronenmikroskop erzeugte Aufnahme eines als Flachfilter ausgestalteten Filterelements. Das Filterelement weist als Filtermedium 1 eine gefaltete Lage und ein streifenförmiges Anschlusselement 2 in Analogie zur Fig. 3 auf. Bezugnehmend auf Fig. 3 zeigt Fig. 5 eine Draufsicht in Richtung des Pfeils A auf ein Filterelement, das längs der in Fig. 3 gezeigten gestrichtelten Linie aufgeschnitten wurde. Das Anschlusselement 2 ist wie das Filtermedium 1 laserlichttransparent und aus einem thermoplastischen Vliesstoff gefertigt. Dem Filtermedium 1 ist ein laserlichtabsorbierender Bereich zugeordnet, der Aktivkohlepartikel 11 aufweist. Ganz konkret sind die Aktivkohlepartikel 11 an den Faltenstirnseiten für das Laserlicht zugänglich. Die Aktivkohlepartikel 11 absorbieren Laserlicht, welches in Richtung des Pfeils B gemäß Fig. 3 eingestrahlt wird. Durch die dabei entstehende Wärme werden Fasern aufgeschmolzen, aus denen das Filtermedium 1 und das Anschlusselement 2 gefertigt sind. An den aufgeschmolzenen Bereichen entstehen Kontaktstellen 4.

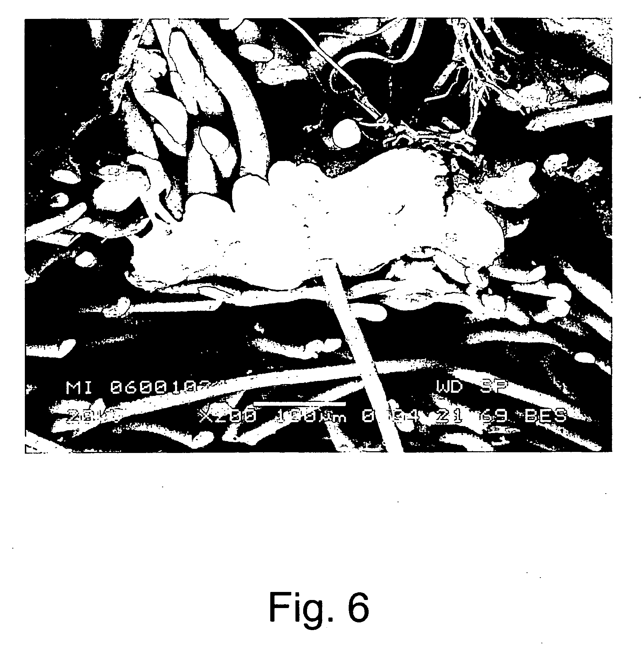

Fig. 6 zeigt die Kontaktstelle 4, die in Fig. 5 gezeigt ist, in stark vergrößerter Ansicht. Die Kontaktstelle 4 ist 400 µm lang und 109 µm tief. Der Maßstab (100 µm) ist als Linie in der unteren Mitte der Aufnahme gemäß Fig. 6 dargestellt. Die zum Laserschweißen des Anschlusselements 2 und des Filtermediums 1 verwendete Laserlicht- bzw. Laserstrahlungsquelle ist als Diodenlaser einer Leistung von 90 W ausgestaltet. Das Laserlicht bzw. die Laserstrahlung weist eine Wellenlänge von 980 nm auf.

Hinsichtlich weiterer vorteilhafter Ausgestaltungen und Weiterbildungen der erfindungsgemäßen Lehre wird einerseits auf den allgemeinen Teil der Beschreibung und anderseits auf die Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Verfahren zum Verbinden eines Filtermediums (1) mit einem Anschlusselement (2, 3, 5, 6, 7, 10), wobei das Filtermedium (1) und das Anschlusselement (2, 3, 5, 6, 7, 10) miteinander in Kontakt verbracht werden und durch Einwirkung von Laserstrahlung miteinander verbunden werden, wobei als Filtermedium (1) eine gefaltete flächige Lage (1) verwendete wird, wobei als Filtermedium (1) ein thermoplastischer Vliesstoff verwendet wird und wobei als Anschlusselement (2, 3, 6, 7, 10) ein thermoplastischer Vliesstoff verwendet wird,
**dadurch gekennzeichnet, dass** mindestens ein Anschlusselement (2, 3, 6, 7, 10) mit den Faltenstirnseiten (1b) der flächigen Lage (1) verbunden wird, wobei ein mehrlagiges Anschlusselement (2, 3, 5, 6, 7, 10) an das Filtermedium angelegt wird, wobei mindestens eine Lage (6) laserlichttransparent und eine weitere Lage (7) laserlichtabsorbierend ist und die laserlichtabsorbierende Lage (7) oder die Lage (6) mit dem Filtermedium (1) verbunden wird, und/ oder dass mindestens ein Anschlusselement (2, 3, 6, 7, 10) mit den Faltenstirnseiten (1 b) der flächigen Lage (1) verbunden wird, wobei ein Anschlusselement (2, 3, 5, 6, 7, 10) an das Filtermedium angelegt wird, wobei mindestens eine laserlichtabsorbierende Lage (7) dem Filtermedium (1) zugeordnet ist und das Anschlusselement (2, 3, 5, 6, 7, 10) mit dem Filtermedium (1) verbunden wird.

2. Verfahren nach Anspruch 1, **dadurch gekennzeichnet, dass** mindestens ein Anschlusselement (2, 5) mit den Faltenrücken (1a) der flächigen Lage (1) verbunden wird.

3. Verfahren nach Anspruch 1 oder 2, **dadurch gekennzeichnet, dass** mit der Laserstrahlung der Laserstrahlungsquelle abgewandte definierte Bereiche (4) des Filtermediums (1) und/ oder des Anschlusselements (2, 3, 5, 6, 7, 10) angeschmolzen werden.

4. Verfahren nach Anspruch 3, **dadurch gekennzeichnet, dass** die Energie der Laserstrahlung durch eine optische Einrichtung auf die Bereiche (4) übertragen wird.

5. Verfahren nach Anspruch 4, **dadurch gekennzeichnet, dass** die optische Einrichtung mit dem Filtermedium (1) und oder dem Anschlusselement (2, 3, 5, 6, 7, 10) in Kontakt gebracht wird.

6. Verfahren nach Anspruch 4 oder 5, **dadurch gekennzeichnet, dass** als optische Einrichtung eine laserlichttransparente Kugel verwendet wird.

7. Verfahren nach Anspruch 4 oder 5, **dadurch gekennzeichnet, dass** als optische Einrichtung mindestens ein laserlichttransparenter, rotierbarer Zylinder verwendet wird.

8. Filterelement, umfassend mindestens ein Filtermedium (1) und mindestens ein dem Filtermedium (1) zugeordnetes Anschlusselement (2, 3, 5, 6, 7, 10), wobei das Filtermedium (1) und das Anschlusselement (2, 3, 5, 6, 7, 10) durch Kontaktstellen (4) miteinander verbunden sind, welche einen durch Laserstrahlung erzeugten Schmelzbereich umfassen, wobei das Filtermedium (1) als Faltenbalg ausgebildet ist und wobei das Filtermedium und das Anschlusselement als thermoplastische Vliesstoffe ausgestaltet sind,
**dadurch gekennzeichnet, dass** die Faltenstirnseiten (1 b) mit dem Anschlusselement (2, 3, 5, 6, 7, 10) verbunden sind, wobei das Anschlusselement (2, 3, 5, 6, 7, 10) mehrlagig ausgebildet ist, wobei mindestens eine Lage (6) laserlichttransparent und eine weitere Lage (7) laserlichtabsorbierend ist, und/ oder dass die Faltenstirnseiten (1 b) mit dem Anschlusselement (2, 3, 5, 6, 7, 10) verbunden sind, wobei das Filtermedium (1) eine laserlichtabsorbierende Lage (7) oder einen laserlichtabsorbierenden Bereich aufweist.

9. Filterelement nach Anspruch 8, **dadurch gekennzeichnet, dass** die Kontaktstellen (4) sich in zumindest einer Raumrichtung höchstens 1 Millimeter erstrecken.

10. Filterelement nach Anspruch 8 oder 9, **dadurch gekennzeichnet, dass** sich die Kontaktstellen (4) höchstens 1 Millimeter in die Tiefe des Materials des Filtermediums (1) und/ oder des Anschlusselements (2, 3, 5, 6, 7, 10) erstrecken.

11. Filterelement nach einem der Ansprüche 8 bis 10, **dadurch gekennzeichnet, dass** die Faltenrücken (1a) mit dem Anschlusselement (2, 5) verbunden sind.

12. Filterelement nach einem der Ansprüche 8 bis 11, **dadurch gekennzeichnet, dass** das Anschlusselement (2, 3, 5, 6, 7, 10) zumindest eine Seite des Filtermediums (1) vollflächig bedeckt.

13. Filterelement nach einem der Ansprüche 8 bis 12, **dadurch gekennzeichnet, dass** der laserlichtabsorbierenden Lage (7) oder dem laserlichtabsorbierenden Bereich Aktivkohle zugeordnet ist.

14. Filterelement nach einem der Ansprüche 8 bis 13, **gekennzeichnet durch** klebstofffreie Kontaktstellen (4).

15. Filterelement nach einem der Ansprüche 8 bis 14, **gekennzeichnet durch** Kontaktstellen (4), an welchen das Filtermedium (1) und das Angchlusselement (2, 3, 5, 6, 7, 10) im Wesentlichen verdickungs- und stauchungsfrei ausgestaltet sind.

## Claims

1. Method for connecting a filter medium (1) to a junction element (2, 3, 5, 6, 7, 10), the filter medium (1) and the junction element (2, 3, 5, 6, 7, 10) being brought into contact with one another and being connected to one another as a result of the action of laser radiation, a folded sheet-like layer (1) being used as the filter medium (1), a thermoplastic nonwoven being used as the filter medium (1), and a thermoplastic nonwoven being used as the function element (2, 3, 6, 7, 10), **characterized in that** at least one junction element (2, 3, 6, 7, 10) is connected to the fold end faces (1b) of the sheet-like layer (1), a multi-layer junction element (2, 3, 5, 6, 7, 10) being laid onto the filter medium, at least one layer (6) being transparent to laser light and a further layer (7) absorbing laser light, and the layer (7) absorbing laser light or the layer (6) being connected to the filter medium (1), and/or **in that** at least one junction element (2, 3, 6, 7, 10) is connected to the fold end faces (1b) of the sheet-like layer (1), a junction element (2, 3, 5, 6, 7, 10) being laid onto the filter medium, at least one layer (7) absorbing laser light being assigned to the filter medium (1), and the junction element (2, 3, 5, 6, 7, 10) being connected to the filter medium (1).

2. Method according to Claim 1, **characterized in that** at least one junction element (2, 5) is connected to the fold spines (1a) of the sheet-like layer (1).

3. Method according to Claim 1 or 2, **characterized in that** defined regions (4) of the filter medium (1) and/or of the junction element (2, 3, 5, 6, 7, 10) which face away from the laser radiation source are fused on by means of the laser radiation.

4. Method according to Claim 3, **characterized in that** the energy of the laser radiation is transmitted to the regions (4) by means of an optical device.

5. Method according to Claim 4, **characterized in that** the optical device is brought into contact with the filter medium (1) and/or with the junction element (2, 3, 5, 6, 7, 10).

6. Method according to Claim 4 or 5, **characterized in that** a sphere transparent to laser light is used as the optical device.

7. Method according to Claim 4 or 5, **characterized in that** at least one rotatable cylinder transparent to laser light is used as the optical device.

8. Filter element, comprising at least one filter medium (1) and at least one junction element (2, 3, 5, 6, 7, 10) assigned to the filter medium (1), the filter medium (1) and the unction element (2, 3, 5, 6, 7, 10) being connected to one another by means of contact points (4) which comprise a fusion region generated by laser radiation, the filter medium (1) being designed as a concertina, and the filter medium and junction element being configured as thermoplastic nonwovens, **characterized in that** the fold end faces (1b) are connected to the junction element (2, 3, 5, 6, 7, 10), the junction element (2, 3, 5, 6, 7, 10) being of multi-layer design, at least one layer (6) being transparent to laser light and a further layer (7) absorbing laser light, and/or **in that** the fold end faces (1b) are connected to the junction element (2, 3, 5, 6, 7, 10), the filter medium (1) having a layer (7) absorbing laser light or a region absorbing laser light.

9. Filter element according to Claim 8, **characterized in that** the contact points (4) extend over at most 1 millimetre in at least one spatial direction.

10. Filter element according to Claims 8 or 9, **characterized in that** the contact points (4) extend over at most one 1 millimetre into the depth of the material of the filter medium (1) and/or of the junction element (2, 3, 5, 6, 7, 10).

11. Filter element according to one of Claims 8 to 10, **characterized in that** the fold spines (1a) are connected to the junction element (2, 5).

12. Filter element according to one of Claim 8 to 11, **characterized in that** the junction element (2, 3, 5, 6, 7, 10) covers at least one side of the filter medium (1) over the entire area.

13. Filter element according to one of Claims 8 to 12, **characterized in that** the layer (7) absorbing laser light or the region absorbing laser light is assigned activate charcoal.

14. Filter element according to one of Claims 8 to 13, **characterized by** adhesive-free contact points (4).

15. Filter element according to one of Claims 8 to 14, **characterized by** contact points (4) at which the filter medium (1) and the junction element (2, 3, 5, 6, 7, 10) have an essentially thickening-free and upset-free configuration.

## Revendications

1. Procédé pour relier un moyen de filtration (1) à un élément de raccordement (2, 3, 5, 6, 7, 10),
le moyen de filtration (1) et l'élément de raccordement (2, 3, 5, 6, 7, 10) étant mis en contact l'un avec l'autre et reliés l'un à l'autre par action d'un rayonnement laser,
une mince couche repliée (1) étant utilisée comme moyen de filtration (1),
un feutre thermoplastique étant utilisé comme moyen de filtration (1) et un feutre thermoplastique étant utilisé comme élément de raccordement (2, 3, 6, 7, 10),
**caractérisé en ce que**
au moins un élément de raccordement (2, 3, 6, 7, 10) est relié aux côtés frontaux (1b) des plis de la mince couche (1), un élément stratifié de raccordement (2, 3, 5, 6, 7, 10) étant appliqué sur le moyen de filtration, au moins une couche (6) étant transparente à la lumière laser et une autre couche (7) absorbant la lumière laser, la couche (7) absorbant la lumière laser ou la couche (6) étant reliées au moyen de filtration (1) et/ou
**en ce qu'**au moins un élément de raccordement (2, 3, 6, 7, 10) est relié aux côtés frontaux (1b) des plis de la mince couche (1), un élément de raccordement (2, 3, 5, 6, 7, 10) étant appliqué sur le moyen de filtration, au moins une couche (7) absorbant la lumière laser étant associée au moyen de filtration (1) et l'élément de raccordement (2, 3, 5, 6, 7, 10) étant relié au moyen de filtration (1).

2. Procédé selon la revendication 1, **caractérisé en ce qu'**au moins un élément de raccordement (2, 5) est relié au dos (1a) des plis de la mince couche (1).

3. Procédé selon les revendications 1 ou 2, **caractérisé en ce que** des parties définies (4) du moyen de filtration (1) et/ou de l'élément de raccordement (2, 3, 5, 6, 7, 10), non tournées vers la source de rayonnement laser, sont fondues au moyen du rayonnement laser.

4. Procédé selon la revendication 3, **caractérisé en ce que** l'énergie du rayonnement laser est transférée sur les parties (4) par un dispositif optique.

5. Procédé selon la revendication 4, **caractérisé en ce que** le dispositif optique est mis en contact avec le moyen de filtration (1) et/ou avec l'élément de raccordement (2, 3, 5, 6, 7, 10).

6. Procédé selon les revendications 4 ou 5, **caractérisé en ce qu'**il utilise comme dispositif optique une sphère transparente à la lumière laser.

7. Procédé selon les revendications 4 ou 5, **caractérisé en ce qu'**il utilise comme dispositif optique au moins un cylindre rotatif transparent à la lumière laser.

8. Elément de filtre comprenant au moins un moyen de filtration (1) et au moins un élément de raccordement (2, 3, 5, 6, 7, 10) associé au moyen de filtration (1),
le moyen de filtration (1) et l'élément de raccordement (2, 3, 5, 6, 7, 10) étant reliés l'un à l'autre par des emplacements de contact (4) qui comprennent une partie fondue formée par un rayonnement laser,
le moyen de filtration (1) étant configuré comme soufflet, le moyen de filtration et l'élément de raccordement étant configurés sous la forme de feutres thermoplastiques,
**caractérisé en ce que**
les côtés frontaux (1b) des plis sont reliés à l'élément de raccordement (2, 3, 5, 6, 7, 10), l'élément de raccordement (2, 3, 5, 6, 7, 10) étant configuré en plusieurs couches, au moins une couche (6) étant transparente à la lumière laser et une autre couche (7) absorbant la lumière laser et/ou
**en ce que** les côtés frontaux (1b) sont reliés à l'élément de raccordement (2, 3, 5, 6, 7, 10), le moyen de filtration (1) présentant une couche (7) absorbant la lumière laser ou une partie absorbant la lumière laser.

9. Elément de filtre selon la revendication 8, **caractérisé en ce que** les emplacements de contact (4) s'étendent dans au moins une direction de l'espace sur au plus un millimètre.

10. Elément de filtre selon les revendications 8 ou 9, **caractérisé en ce que** les emplacements de contact (4) s'étendent sur une profondeur d'au plus 1 millimètre dans le matériau du moyen de filtration (1) et/ou de l'élément de raccordement (2, 3, 5, 6, 7, 10).

11. Elément de filtre selon l'une des revendications 8 à 10, **caractérisé en ce que** les dos (1a) des plis sont reliés à l'élément de raccordement (2, 5).

12. Elément de filtre selon l'une des revendications 8 à 11, **caractérisé en ce que** l'élément de raccordement (2, 3, 5, 6, 7, 10) recouvre la totalité de la surface d'au moins un côté du moyen de filtration (1).

13. Elément de filtre selon l'une des revendications 8 à 12, **caractérisé en ce que** du charbon actif est associé à la couche (7) absorbant la lumière laser ou à la partie absorbant la lumière laser.

14. Elément de filtre selon l'une des revendications 8 à 13, **caractérisé par** des emplacements de contact (4) exempts d'adhésif.

15. Elément de filtre selon l'une des revendications 8 à 14, **caractérisé par** des emplacements de contact (4) sur lesquels le moyen de filtration (1) et l'élément de raccordement (2, 3, 5, 6, 7, 10) sont configurés essentiellement sans épaississement ni accumulation de matière.
